# EUROPÄISCHE PATENTSCHRIFT

(11) **EP 1 275 544 B1**
(45) Veröffentlichungstag und Bekanntmachung des Hinweises auf die Patenterteilung: **14.11.2007**
(21) Anmeldenummer: 02014225.3
(22) Anmeldetag: 26.06.2002
(51) Int. Cl.: B60J 7/20

(54) **Abdeckvorrichtung für einen Verdeckkasten**
Covering device for a roof storage compartment
Dispositif pour la couverture du compartiment de garde d'un toit de véhicule

(30) Priorität: 14.07.2001 DE 10134369
(43) Veröffentlichungstag der Anmeldung: 15.01.2003
(73) Patentinhaber: DaimlerChrysler AG, 70327 Stuttgart (DE)
(72) Erfinder: Koch, Michael, 71065 Sindelfingen (DE); Schrader, Jürgen, 71093 Weil im Schönbuch (DE)

(56) Entgegenhaltungen:
- EP-A- 1 136 295
- DE-A- 4 446 483
- DE-A- 10 051 615
- DE-C- 4 445 941
- US-A- 6 030 023
- US-A- 6 145 915

## Beschreibung

Die Erfindung betrifft eine Abdeckvorrichtung für einen Verdeckkasten eines Fahrzeugs mit versenkbarer Dachkonstruktion, insbesondere für ein Hardtop-Fahrzeug, mit den Merkmalen des Oberbegriffs des Anspruchs 1. Eine Vorrichtung dieser Art ist aus der DE 10051615 A bekannt.

Ferner ist aus der DE 44 46 483 C2 eine derartige Abdeckvorrichtung für ein Hardtop-Fahrzeug bekannt, bei der die Dachkonstruktion ein vorderes Dachteil und ein mit diesem verbundenes Rückfensterteil aufweist. Die Dachkonstruktion ist mittels einer karosserieseitig abgestützten Zwangssteuerungseinrichtung in den hinter einem Fondbereich in einem Heckbereich der Fahrzeugkarosserie angeordneten Verdeckkasten einschwenkbar. Dieser Verdeckkasten ist mit einem nach hinten hochklappbaren Verdeckkastendeckel verschließbar. Dabei bildet sich zwischen einem vorderen Randbereich des geschlossenen Verdeckkastendeckels und einem hinteren Randbereich des Fondbereichs ein Freiraum aus, der mittels einer Abdeckeinheit der Abdeckvorrichtung verschließbar ist. Diese Abdeckeinheit weist ein vorderes Abdeckteil, ein mittleres Abdeckteil und ein hinteres Abdeckteil sowie zwei seitliche Abdeckteile auf, wobei diese Abdeckteile in einer Schließstellung der Abdeckeinheit bei versenkter Dachkonstruktion eine im wesentlichen ebene und lückenlose Abdeckung des Freiraums bilden, die sich etwa bündig an den Fondbereich und an den verschlossenen Verdeckkastendeckel anschließt.

Bei der bekannten Abdeckvorrichtung ist eine Falteinrichtung vorgesehen, mit der das hintere Abdeckteil und das mittlere Abdeckteil in eine etwa senkrecht aufgestellte Haltestellung verfahrbar sind, in der ihre Unterseiten aneinander anliegen. In dieser Faltstellung schließen das mittlere Abdeckteil und das hintere Abdeckteil an einen hinteren Randbereich des vorderen Abdeckteils an. Die Faltbarkeit der Abdeckteile ist erforderlich, um für das Verschwenken der Dachkonstruktion den dazu erforderlichen Verstellweg freizugeben. Sämtliche Abdeckteile können außerdem zusammen nach Art eines Schlittens in Fahrzeuglängsrichtung verstellt werden. Diese Verstellbarkeit in Fahrzeuglängsrichtung wird benötigt, um bei versenkter Dachkonstruktion einen Spalt verdecken zu können, der sich erst beim Versenken der Dachkonstruktion unmittelbar vor dem vorderen Randbereich des Verdeckkastendeckels ausbildet und der bei geschlossener Dachkonstruktion von einem unteren Randbereich des Rückfensterteils verschlossen ist. Dementsprechend besitzt die Abdeckeinheit der bekannten Abdeckvorrichtung eine vordere Schließstellung, die der geschlossenen Dachkonstruktion zugeordnet ist und in der die Abdeckteile nach vorn verschoben sind und den Spalt für die Dachkonstruktion freigeben, sowie eine hintere Schließstellung, die der versenkten Dachkonstruktion zugeordnet ist und in der die nach hinten verschobenen Abdeckteile den Spalt verschließen. Insgesamt ist bei der bekannten Abdeckvorrichtung die Realisierung der unterschiedlichen Verstellmöglichkeiten relativ aufwendig.

Die vorliegende Erfindung beschäftigt sich mit dem Problem, für eine Abdeckvorrichtung der eingangs genannten Art eine vorteilhafte Ausführungsform anzugeben, die einen relativ preiswerten Aufbau besitzt.

Dieses Problem wird durch eine Abdeckvorrichtung mit den Merkmalen des Anspruchs 1 gelöst. Vorteilhafte Ausführungsformen sind in den Unteransprüchen dargelegt. Durch die erfindungsgemäß vorgeschlagene Lagerung des hinteren Abdeckteils am vorderen Abdeckteil sowie durch die für die Verstellung des hinteren Abdeckteils vorgesehene Verstellkinematik ergeben sich Möglichkeiten zur Vereinfachung der für die Verstellung der Abdeckteile vorgesehenen Maßnahmen, z.B. für einen Stellantrieb. Insbesondere ist eine Verstellung der einzelnen Abdeckteile in Fahrzeuglängsrichtung nicht erforderlich, um den Spalt für die Dachkonstruktion zwischen Fondbereich und Verdeckkastendeckel freizugeben bzw. zu verschließen. Dies wird dadurch erreicht, daß die Dimensionierung des hinteren Abdeckteils genau so gewählt wird, daß das vordere Abdeckteil bei weggeklapptem hinteren Abdeckteil zum Verschließen des Freiraums im wesentlichen bündig an der Innenseite des unteren Randbereichs der geschlossenen Dachkonstruktion zur Anlage kommt.

Bei einer vorteilhaften Weiterbildung kann das hintere Abdeckteil so am vorderen Abdeckteil gelagert sein, daß es zum Einnehmen seiner Passivstellung auf die Unterseite des vorderen Abdeckteils wegklappbar ist. Bei dieser Ausführungsform befindet sich bei geschlossener Dachkonstruktion das nicht benötigte hintere Abdeckteil außerhalb des Fahrzeuginnenraums, wodurch einerseits im Bereich der durch das vordere Abdeckteil gebildeten Hutablage mehr Fahrzeuginnenraum zur Verfügung steht und wobei andererseits der dadurch gebildete optische Gesamteindruck einen höheren ästhetischen Wert besitzt.

Bei einer bevorzugten Weiterbildung kann zum Verstellen des hinteren Abdeckteils eine Hebelanordnung am vorderen Abdeckteil angebracht sein, die eingangsseitige Linearverstellungen in Schwenkverstellungen des hinteren Abdeckteils wandelt. Lineare Verstellbewegungen können besonders einfach von einem externen Antrieb auf die Hebelanordnung übertragen werden, so dass der zur Verstellbewegung des hinteren Abdeckteils erforderliche Antrieb mit vergleichsweise geringem Aufwand außerhalb des vorderen Abdeckteils an einer geeigneten Stelle am Fahrzeug untergebracht werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch,
- Fig. 1: eine perspektivische Ansicht auf einen Heckbereich eines mit einer erfindungsgemäßen Abdeckeinrichtung ausgestatteten Personenkraftwagens bei versenkter Dachkonstruktion,
- Fig. 2: eine perspektivische Ansicht auf eine Abdeckeinheit der erfindungsgemäßen Abdeckvorrichtung und auf einen Verdeckkastendeckel, des im Übrigen nicht dargestellten Kraftfahrzeugs bei versenkter Dachkonstruktion,
- Fig. 3: eine Ansicht wie in Fig. 2, jedoch bei geschlossener Dachkonstruktion, die allerdings nur teilweise angedeutet ist,
- Fig. 4: eine Ansicht von unten auf ein vorderes Abdeckteil mit daran gelagertem hinteren Abdeckteil bei in seine Aktivstellung verstelltem hinterem Abdeckteil, und
- Fig. 5: eine Ansicht wie in Fig. 4, jedoch bei in seine Passivstellung verstelltem hintere Abdeckteil.

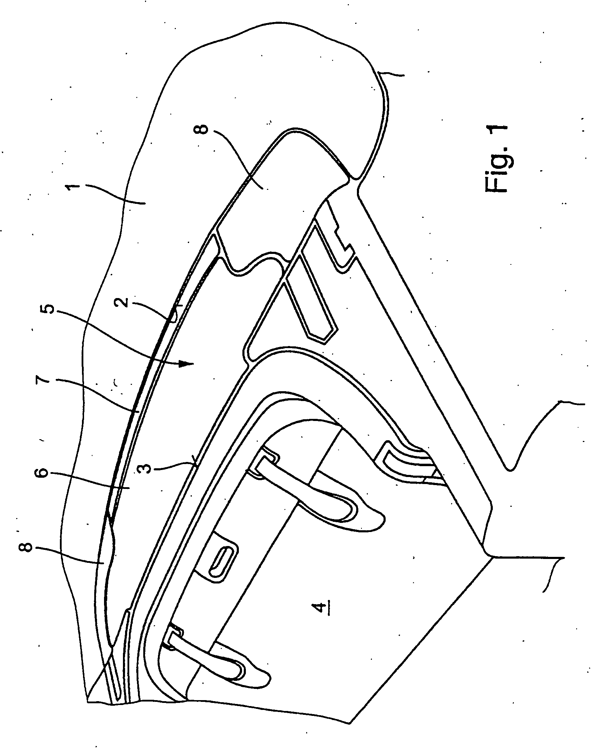

In Fig. 1 ist ein hinterer Abschnitt eines im Übrigen nicht dargestellten Personenkraftwagens dargestellt, der eine versenkbare Dachkonstruktion aufweist, so dass es sich bei dem Fahrzeug um ein sogenanntes Cabriolet handelt. Bei der Dachkonstruktion handelt es sich vorzugsweise um ein sogenanntes Hardtop, also um eine Dachkonstruktion mit Schalenelementen aus Metall oder Kunststoff. Ebenso ist eine Dachkonstruktion als Softtop möglich, bei der das versenkbare Dach im wesentlichen aus einem Stoffmaterial besteht. Im Heck des Fahrzeugs ist zur Unterbringung der versenkten Dachkonstruktion ein Verdeckkasten ausgebildet. Dieser Verdeckkasten ist mit einem Verdeckkastendeckel 1 verschließbar, der zum Öffnen des Verdeckkastens nach hinten hochklappbar an der Fahrzeugkarosserie gelagert ist. Sofern im Verdeckkasten neben bzw. unter dem Raum für die Unterbringung der Dachkonstruktion ein zusätzlicher Stauraum, sogenannter Kofferraum, enthalten ist, kann der Verdeckkastendeckel 1 zum Öffnen dieses Kofferraums außerdem nach vorn hochklappbar ausgebildet sein.

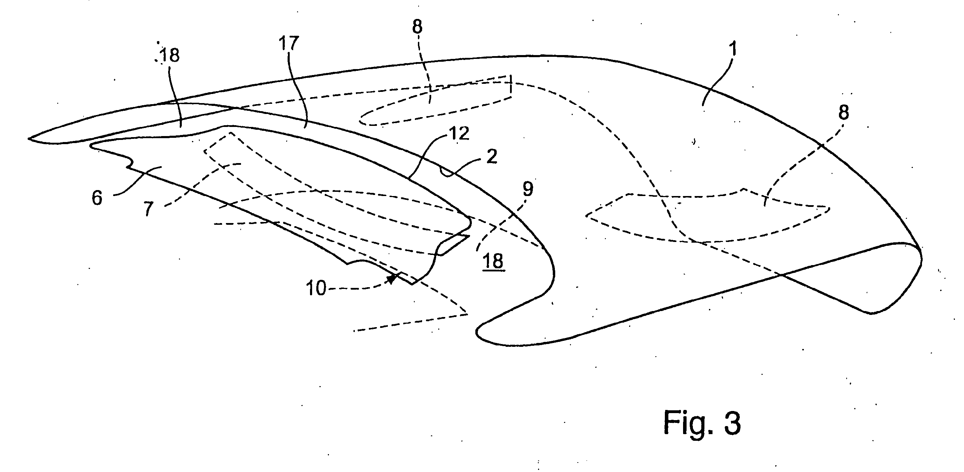

Bei verschlossenem Verdeckkastendeckel 1 verbleibt zwischen einem vorderen Randbereich 2 des Verdeckkastendeckels 1 und einem hinterem Randbereich 3 eines Fondbereichs 4 des Fahrzeugs ein Freiraum. Dieser Freiraum ist in Fig. 1 durch eine Abdeckeinheit 5 verschlossen, die ein vorderes Abdeckteil 6, ein hinteres Abdeckteil 7 sowie zwei seitliche Abdeckteile 8 aufweist. Der Freiraum zwischen Verdeckkastendeckel 1 und Fondbereich 4 wird bei versenkter Dachkonstruktion von den vier Abdeckteilen 6, 7, 8 der Abdeckeinheit 5 im wesentlichen lückenlos geschlossen, wobei sich die Abdeckteile 6, 7, 8 etwa bündig an die Außenkontur des Verdeckkastendeckels 1 sowie des hinteren Randbereichs 3 des Fondbereichs 4 anschließen. Bei geschlossener Dachkonstruktion sind das hintere Abdeckteil 7 und die seitlichen Abdeckteile 8 weggeklappt, wobei ein vom weggeklappten hinteren Abdeckteil 7 frei gegebener Spalt 17 (vgl. Fig. 3) von einem hinteren und unteren Randbereich der ausgefahrenen Dachkonstruktion durchsetzt ist, während die weggeklappten seitlichen Abdeckteile 8 jeweils eine Durchgangsöffnung 18 (vgl. Fig. 3) für eine in Fig. 3 mit 9 bezeichnete C-Säule der in Fig. 3 mit 10 bezeichneten geschlossenen Dachkonstruktion freigeben. Das vordere Abdeckteil 6 bildet in der Schließstellung bei verschlossener Dachkonstruktion eine Hutablage im Innenraum des Fahrzeugs.

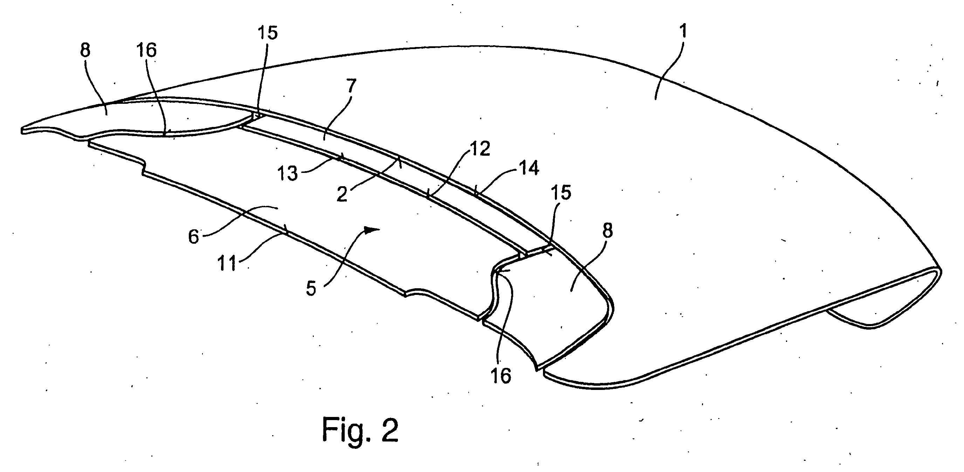

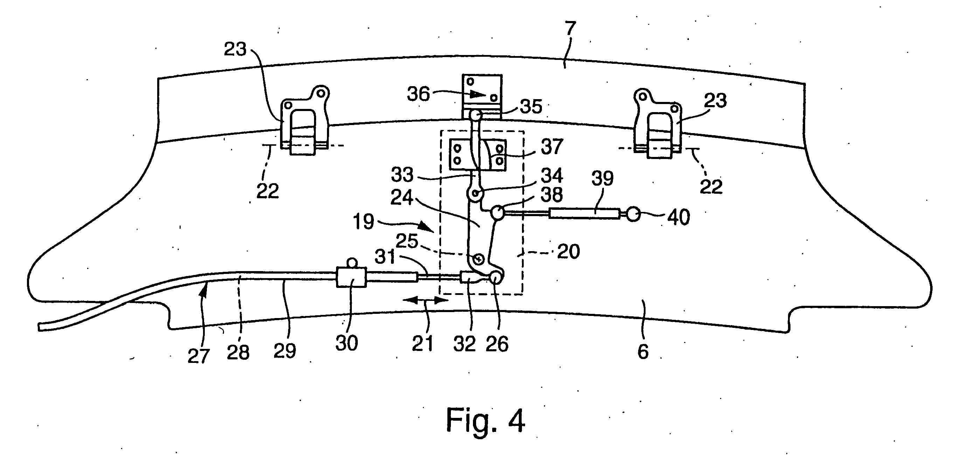

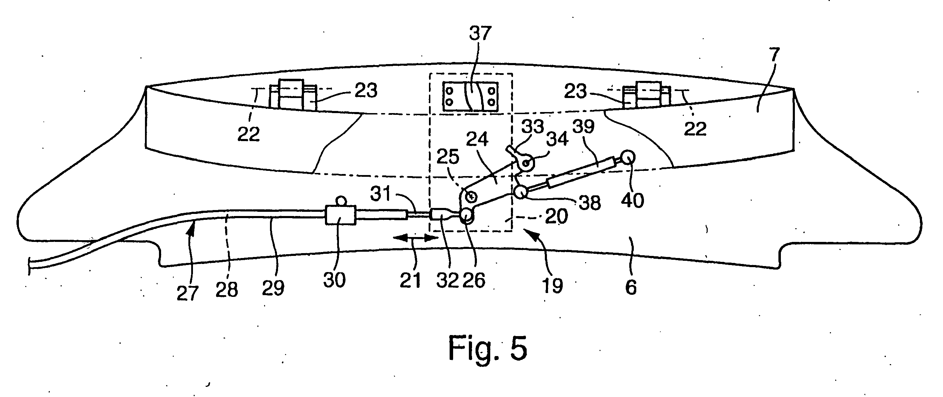

Das vordere Abdeckteil 6 ist an der Fahrzeugkarosserie schwenkbar gelagert, während das hintere Abdeckteil 7 am vorderen Abdeckteil 6 schwenkbar gelagert ist. Die seitlichen Abdeckteile 8 sind am Verdeckkastendeckel 1 schwenkbar gelagert. Durch die erfindungsgemäß vorgeschlagene Lagerung der einzelnen Abdeckteile 6, 7, 8 lässt sich eine spezielle Verstellkinematik erreichen, die im einzelnen anhand der Figuren 2 bis 5 näher erläutert wird, wobei in den Figuren 2 und 3 nur noch die Abdeckteile 6, 7, 8 der Abdeckeinheit 5 und der Verdeckkastendeckel 1 dargestellt sind, während die Figuren 4 und 5 näher auf den Verstellmechanismus des hinteren Abdeckteils 7 eingehen.

In Fig. 2 ist die Dachkonstruktion 10 im Verdeckkasten verstaut und die Abdeckeinheit 5 befindet sich in ihrer Schließstellung, so daß sämtliche Abdeckteile 6, 7, 8 zum formintegrierten Verschließen des Freiraums dienen. Hierbei sind die seitlichen Abdeckteile 8 sowie das hintere Abdeckteil 7 ausgeklappt.

In der in Fig. 2 gezeigten Stellung grenzt das vordere Abdeckteil 6 mit einem vorderen Randbereich 11 an den hinteren Randbereich 3 des Fondbereichs 4 (vgl. Fig. 1). Mit einem hinteren Randbereich 12 grenzt das vordere Abdeckteil 6 an einen vorderen Randbereich 13 des hinteren Abdeckteils 7. Das hintere Abdeckteil 7 grenzt seinerseits mit einem hinteren Randbereich 14 an den vorderen Randbereich 2 des Verdeckkastendeckels 1. Die seitlichen Abdeckteile 8 grenzen sowohl an den vorderen Randbereich 2 des Verdeckkastendeckels 1 als auch an seitliche Randbereiche 15 und 16 des hinteren Abdeckteils 7 bzw. des vorderen Abdeckteils 6. Darüber hinaus grenzen die seitlichen Abdeckteile 8 an den hinteren Randbereich 3 des Fondbereichs 4 an (vgl. Fig. 1).

Zum Ausfahren der Dachkonstruktion in deren geschlossene Stellung wird zunächst der Verdeckkastendeckel 1 nach hinten hochgeklappt, wobei die seitlichen Abdeckteile 8 in ihrer ausgeklappten Aktivstellung bleiben. Anschließend schwenkt die Dachkonstruktion 10 aus dem Verdeckkasten aus, um den bis dahin offenen Fahrzeuginnenraum zu verschließen. Mit der Verstellbewegung der Dachkonstruktion sind die Verstellbewegungen des vorderen Abdeckteils 6 sowie des hinteren Abdeckteils 7 synchronisiert, so daß das vordere Abdeckteil 6 rechtzeitig nach vorn hochklappt und das hintere Abdeckteil 7 auf die Unterseite des vorderen Abdeckteils 6 wegklappt. Durch das Aufstellen des vorderen Abdeckteils 6 und durch das Wegklappen des hinteren Abdeckteils 7 kann ein hinreichend großer Verstellweg für die Dachkonstruktion 10 bereit gestellt werden. Bei geschlossener Dachkonstruktion 10 wird dann das vordere Abdeckteil 6 wieder nach hinten und unten zurückgeklappt, wobei allerdings das hintere Abdeckteil 7 an der Unterseite des vorderen Abdeckteils 6 in seiner als Passivstellung bezeichneten weggeklappten Stellung verbleibt. Vor dem Zurückklappen des Verdeckkastendeckels 1 nach vorn und unten werden die seitlichen Abdeckteile 8 auf die Unterseite des Verdeckkastendeckels 1 in ihre Passivstellung weggeklappt.

In Fig. 3 ist der Zustand wiedergegeben, der sich bei geschlossener Dachkonstruktion 10, geschlossenem Freiraum und geschlossenem Verdeckkasten ergibt. In diesem Zustand befinden sich das vordere Abdeckteil 6 und der Verdeckkastendeckel 1 in der selben Schließstellung, die sie auch in Fig. 2 bei versenkter Dachkonstruktion 10 zum Verschließen von Freiraum und Verdeckkasten einnehmen. Im Unterschied zu Fig. 2 sind bei diesem Zustand jedoch das hintere Abdeckteil 7 auf die Unterseite des vorderen Abdeckteils 6 und die seitlichen Abdeckteile 8 auf die Unterseite des Verdeckkastendeckels 1 weggeklappt.

Bei in seine Passivstellung weggeklapptem hinteren Abdeckteil 7 bildet sich zwischen dem hinteren Randbereich 12 des vorderen Abdeckteils 6 und dem vorderen Randbereich 2 des Verdeckkastendeckels 1 ein Spalt 17 aus, der von einem nicht dargestellten unteren und hinteren Randbereich der Dachkonstruktion 10 durchsetzt ist. Die weggeklappten seitlichen Abdeckteile 8 hinterlassen zwischen vorderem Abdeckteil und Verdeckkastendeckel 1 jeweils eine Durchgangsöffnung 18 für eine der C-Säulen 9 der mit unterbrochenen Linien angedeuteten geschlossenen Dachkonstruktion 10. Die weggeklappten Abdeckteile 7 und 8 sind bei geschlossener Dachkonstruktion 10 somit nicht sichtbar, wodurch sich ein besonders formschön gestalteter Fahrzeuginnenraum ergibt. Dies ist insbesondere dadurch möglich, daß die Dimensionierung der seitlichen Abdeckklappe 8 sowie der hinteren Abdeckklappe 7 so gewählt ist, daß das vordere Abdeckteil 6 bei geschlossener Dachkonstruktion 10 mit seinem hinteren Randbereich 12 im wesentlichen nahtlos an den unteren, inneren Randbereich der geschlossenen Dachkonstruktion 10 anschließt.

Entsprechend den Fig. 4 und 5 ist zum Verstellen des hinteren Abdeckteils 7 eine Hebelanordnung 19 vorgesehen, die direkt oder über eine mit unterbrochener Linie angedeutete Trägerplatte 20 indirekt am vorderen Abdeckteil 6 angebracht ist. Diese Hebelanordnung 19 ist so ausgebildet, daß eingangsseitig daran angreifende, durch einen Doppelpfeil 21 symbolisierte Linearverstellungen in Schwenkverstellungen des hinteren Abdeckteils 7 um eine parallel zum vorderen Abdeckteil 6 verlaufende Schwenkachse 22 umwandeln. Dabei ist das hintere Abdeckteil 7 über entsprechende Scharniere 23 am vorderen Abdeckteil 6 gelagert. Die Hebelanordnung 19 besitzt einen Umlenkhebel 24, der um eine im wesentlichen senkrecht auf dem vorderen Abdeckteil 6 stehende und bezüglich des vorderen Abdeckteils 6 ortsfeste Schwenkachse 25 am vorderen Abdeckteil 6 schwenkgelagert ist. An diesem Umlenkhebel 24 greift bei 26 eine Zug-Druck-Kabeleinheit 27 an, um Linearverstellungen gemäß einem Doppelpfeil 21 in den Umlenkhebel 24 einzuleiten. Eine derartige Zug-Druck-Kabeleinheit 27 besteht üblicherweise aus einem flexiblen sowie druck- und zugsteifen Kabel 28, das sich in einer flexiblen sowie druck- und zugsteifen Hülle 29 erstreckt. Diese Hülle 29 ist mittels einer Halterung 30 am vorderen Abdeckteil 6 fixiert. Das Kabel 28 weist an seinem aus der Hülle 29 axial austretenden Ende ein biege-, zugund drucksteifes Stangen- oder Rohrelement 31 auf, das mit Hilfe eines Anschlußglieds 32 am Umlenkhebel 24 bei 26 gelenkig angreift. An ihrem nicht gezeigten anderen Ende kann die Zug-Druck-Kabeleinheit 27 an einen geeigneten, externen Linearantrieb anschlossen sein, mit dessen Hilfe die Schwenkverstellung des hinteren Abdeckteils 7 durchgeführt werden soll. Bevorzugt wird hierbei eine Ausführungsform, bei der die Zug-Druck-Kabeleinheit 27 in eine nicht gezeigte Zwangssteuerungseinrichtung eingebunden ist, die zur Schwenkverstellung der Dachkonstruktion vorgesehen und karosserieseitig abgestützt ist. Durch eine mechanische Zwangskopplung zwischen dieser Zwangssteuerungseinrichtung und der Zug-Druck-Kabeleinheit 27 kann die Verstellung des hinteren Abdeckteils 7 zwangsläufig mit der Verstellbewegung der Dachkonstruktion synchronisiert werden, wodurch eine stets gleichbleibende, synchronisierte Kinematik für das hintere Abdeckteil 7 erreicht wird.

Am Umlenkhebel 24 greift außerdem eine Koppelstange 33 an, die einenends mittels eines ersten Kugelgelenks 34 am Umlenkhebel 24 und anderenends mittels eines zweiten Kugelgelenks 35 an einem Beschlagelement 36 gelagert ist, das am hinteren Abdeckteil 7 befestigt ist. Die Koppelstange 33 erstreckt sich in der in Fig. 4 gezeigten Aktivstellung des hinteren Abdeckteils 7 im wesentlichen flach entlang der Unterseite des vorderen Abdeckteils 6, wodurch sich insgesamt ein relativ flacher Aufbau ergibt.

Am vorderen Abdeckteil 6 bzw. an der Trägerplatte 20 ist eine Führungskulisse 37 befestigt, in die die Koppelstange 33 bei Erreichen der Aktivstellung gemäß Fig. 4 einläuft. Diese Führungskulisse 37 übergreift dabei die Koppelstange 33 quer zu deren Längsrichtung. Diese Bauweise erzwingt eine Stabilisierung der Aktivstellung des hinteren Abdeckteils 7 und bildet eine formschlüssige Sicherung oder Arretierung des in seine Aktivstellung verstellten hinteren Abdeckteils 7.

Am Umlenkhebel 24 greift bei 38 außerdem ein als Gasdruckfeder ausgebildetes Federelement 39 gelenkig an. Diese Gasdruckfeder 39 ist an ihrem anderen Ende bei 40 ortsfest aber um eine parallel zur Schwenkachse 25 verlaufende Achse drehbar am vorderen Abdeckteil 6 angelenkt. Die Gasdruckfeder 39 ist dabei so positioniert und mit dem Umlenkhebel 24 gekoppelt, daß die Gasdruckfeder 39 den Umlenkhebel 24 und somit die ganze Hebelanordnung 19 in die in Fig. 4 gezeigte Stellung vorspannt, in welcher das hintere Abdeckteil 7 seine ausgeklappte Aktivstellung einnimmt.

Von besonderer Bedeutung ist hierbei, daß der Umlenkhebel 24 in der in Fig. 4 gezeigten Aktivstellung des hinteren Abdeckteils 7 eine erste Übertotpunktlage einnimmt, in der die Kraftübertragungsrichtung der Kopplungsstange 33 in Fig. 4 links an der Schwenkachse 25 des Umlenkhebels 24 vorbeigeht. Das bedeutet, daß in dieser ersten Übertotpunktlage über die Kopplungsstange 33 in den Umlenkhebel 24 eingeleitete Druckkräfte den Umlenkhebel 24 entgegen dem Uhrzeigersinn, also in einer der Deaktivierung des hinteren Abdeckteils 7 entgegenwirkenden Richtung antreiben. Dies hat zur Folge, daß am hinteren Abdeckteil 7 angreifende Rückstellkräfte keine Verschwenkung des Umlenkhebels 24 erzwingen können. Insoweit ist die Aktivstellung stabil.

Des weiteren besitzt der Umlenkhebel 24 in der in Fig. 5 gezeigten Passivstellung des hinteren Abdeckteils 7 eine zweite Übertotpunktlage, in der die Kraftrichtung der Gasdruckfeder 39 gemäß Fig. 5 unterhalb der Schwenkachse 25 des Umlenkhebels 24 verläuft. Das bedeutet, daß in dieser zweiten Übertotpunktlage über die Gasdruckfeder 39 in den Umlenkhebel 24 eingeleitete Druckkräfte (Federrückstellkräfte) den Umlenkhebel 24 im Uhrzeigersinn, also in einer der Aktivierung des hinteren Abdeckteils 7 entgegenwirkenden Richtung antreiben. Das bedeutet, daß die Gasdruckfeder 42 die Passivstellung sichert.

### Die erfindungsgemäße Hebelanordnung 19 arbeitet wie folgt:

Um das hintere Abdeckteil 7 von der in Fig. 4 gezeigten Aktivstellung in die in Fig. 5 gezeigte Passivstellung zu Verschwenken, wird über die Zug-Druck-Kabeleinheit 27 bei 26 eine Zugverstellung in den Umlenkhebel 24 eingeleitet, wodurch dieser im Uhrzeigersinn angetrieben wird. Bei der Drehverstellung des Umlenkhebels 24 im Uhrzeigersinn wird die Gasdruckfeder 39 entgegen ihrer Federkraft gespannt. Außerdem wird dabei die Koppelstange 33 aus der Führungskulisse 37 herausbewegt, so daß eine Zugkraft über das Beschlagelement 36 in das hintere Abdeckteil 7 eingeleitet wird. Durch die vorgesehenen Hebelarme wird dadurch eine Schwenkverstellung des hinteren Abdeckteils 7 um seine Schwenkachse 22 erzwungen. Im Verlaufe dieser Schwenkverstellung nimmt der Abstand des zweiten Kugelgelenks 35 vom vorderen Abdeckteil 6 zunächst zu und dann wieder ab, wobei sich gleichzeitig die räumliche Neigung der Koppelstange 33 entsprechend verändert. Zur Erzielung der gewünschten Kinematik können die Scharniere 23, mit denen das hintere Abdeckteil 7 am vorderen Abdeckteil 6 gelagert ist, z.B. so positioniert sein, daß die dadurch definierte Schwenkachse 22 etwa zwischen den Kugelgelenken 34 und 35 der Koppelstange 33 verläuft, wenn sich das hintere Abdeckteil 7 in seiner Aktivstellung gemäß Fig. 4 befindet.

In Fig. 5 hat das hintere Abdeckteil 7 seine Passivstellung erreicht, d.h. das Abdeckteil 7 ist auf die Unterseite des vorderen Abdeckteils 6 geklappt, wobei insgesamt eine sehr flache Anordnung erreicht wird, da die Unterseiten der beiden Abdeckteile 6 und 7 quasi aneinander anliegen, während ihre Oberseiten im wesentlichen parallel zueinander verlaufen.

Die der Passivstellung des hinteren Abdeckteils 7 zugeordnete zweite Übertotpunktlage des Umlenkhebels 24 bewirkt, daß die relativ starke Rückstellkraft der Gasdruckfeder 39 den Umlenkhebel 24 weiter im Uhrzeigersinn antreibt, also in der Deaktivierungsrichtung des hinteren Abdeckteils 7. Auf diese Weise wird die Passivstellung des hinteren Abdeckteils 7 gesichert. Zum Aktivieren des hinteren Abdeckteils 7 müssen über die Zug-Druck-Kabeleinheit 27 entsprechende Druckkräfte in den Umlenkhebel 24 eingeleitet werden, die zunächst die Rückstellkraft der Gasdruckfeder 39 überwinden müssen. Nach der Überwindung der zweiten Übertotpunktlage unterstützt jedoch die Rückstellkraft der Gasdruckfeder 39 die Aktivierung des hinteren Abdeckteils 7.

Zum Verstellen des vorderen Abdeckteils 6 kann ein nicht gezeigter Schwenkantrieb vorgesehen sein, mit dem das vordere Abdeckteil 6 um eine parallel zur Schwenkachse 22 verlaufende Achse relativ zur Fahrzeugkarosserie schwenkverstellbar ist. Zweckmäßig ist dieser Schwenkantrieb in die bereits weiter oben erwähnte Zwangssteuerungseinrichtung zum Verstellen der Dachkonstruktion integriert, derart, daß sich eine mechanische Zwangskopplung zwischen dieser Zwangssteuerungseinrichtung und dem Schwenkantrieb für das vordere Abdeckteil 6 ausbildet. Um eine hinreichend große Schwenkverstellung des vorderen Abdeckteils 6 erzielen zu können, kann es erforderlich sein, die Achse, um welche das vordere Abdeckteil 6 verschwenkt wird, mehr oder weniger weit vom vorderen Abdeckteil 6 entfernt anzuordnen. Um auch bei diesen relativ großen Verstellwegen den Stellantrieb für das hintere Abdeckteil 7 gewährleisten zu können, ist die Zug-Druck-Kabeleinheit 27 dementsprechend flexibel ausgebildet, was durch das flexible Kabel 28 und die flexible Hülle 29 realisiert ist. Wie bereits oben erwähnt, ist das in den Fig. 4 und 5 nicht gezeigte andere Ende der Zug-Druck-Kabeleinheit 27 zweckmäßig ebenfalls in die genannte Zwangssteuerungseinrichtung zum Verstellen der Dachkonstruktion integriert, wobei dies grundsätzlich unabhängig von der Integration des Schwenkantriebs für das vordere Abdeckteil 6 erfolgen kann. Durch die mechanische Zwangskopplung der Antriebsmittel für das vordere Abdeckteil 6 sowie für das hintere Abdeckteil 7 mit der Zwangssteuerungseinrichtung für die Dachkonstruktion 10 können die Schwenkverstellungen des vorderen Abdeckteils 6 sowie des hinteren Abdeckteils 7 in den Ablauf der Verstellbewegungen der Dachkonstruktion in geeigneter Weise integriert werden, wobei diese Synchronisation der Bewegungsabläufe aufgrund der mechanischen Zwangskopplungen für jeden Verstellvorgang der Dachkonstruktion reproduzierbar ist. Diese Maßnahme fördert somit die Funktionssicherheit des gesamten Bewegungsablaufs.

## Patentansprüche

1. Abdeckvorrichtung für einen Verdeckkasten eines Fahrzeugs mit versenkbarer Dachkonstruktion (10), insbesondere für ein Hardtop-Fahrzeug, wobei die Dachkonstruktion (10) in den hinter einem Fondbereich (4) in einem Heckbereich der Fahrzeugkarosserie angeordneten Verdeckkasten einschwenkbar ist, wobei der Verdeckkasten mit einem nach hinten hochklappbaren Verdeckkastendeckel (1) verschließbar ist, wobei zwischen einem vorderen Randbereich (2) des geschlossenen Verdeckkastendeckels (1) und einem hinteren Randbereich (3) des Fondbereichs (4) ein Freiraum verbleibt, der mit einer Abdeckeinheit (5) der Abdeckvorrichtung verschließbar ist, welche Abdeckeinheit (5) ein vorderes Abdeckteil (6) und ein hinteres Abdeckteil (7) aufweist,
**dadurch gekennzeichnet,**
**daß** das hintere Abdeckteil (7) am vorderen Abdeckteil (6) schwenkverstellbar gelagert und zwischen einer Aktivstellung, in der das hintere Abdeckteil (7) einen Spalt (17) zwischen einem hinteren Randbereich (12) des vorderen Abdeckteils (6) und dem vorderen Randbereich (2) des Verdeckkastendeckels (1) für einen unteren Randbereich der Dachkonstruktion (10) verschließt, und einer Passivstellung verstellbar ist, in der das hintere Abdeckteil (7) den Spalt (17) freigibt.

2. Abdeckvorrichtung nach Anspruch 1,
**dadurch gekennzeichnet,**
**daß** das hintere Abdeckteil (7) in seiner Passivstellung auf die Unterseite des vorderen Abdeckteils (6) geklappt ist.

3. Abdeckvorrichtung nach Anspruch 1 oder 2,
**dadurch gekennzeichnet,**
**daß** zum Verstellen des hinteren Abdeckteils (7) eine Hebelanordnung (19) am vorderen Abdeckteil (6) angebracht ist, die eingangsseitige Linearverstellungen in Schwenkverstellungen des hinteren Abdeckteils (7) wandelt.

4. Abdeckvorrichtung nach Anspruch 3,
**dadurch gekennzeichnet,**
**daß** die Hebelanordnung (19) einen Umlenkhebel (24) aufweist, der um eine im wesentlichen senkrecht zum vorderen Abdeckteil (6) verlaufende Schwenkachse (25) schwenkgelagert ist, an dem einenends die Linearverstellungen angreifen und an dem anderenends eine Koppelstange (33) mittels eines ersten Kugelgelenks (34) gelagert ist, wobei die Koppelstange (33) an ihrem anderen Ende mittels eines zweiten Kugelgelenks (35) direkt oder indirekt am hinteren Abdeckteil (7) angreift, wobei eine am Umlenkhebel (24) angreifende Zugverstellung über die Koppelstange (33) eine Zugverstellung am hinteren Abdeckteil (7) einleitet, die das hintere Abdeckteil (7) zur Unterseite des vorderen Abdeckteils (6) wegklappt.

5. Abdeckvorrichtung nach Anspruch 4,
**dadurch gekennzeichnet,**
**daß** die Koppelstange (33) beim Erreichen der Aktivstellung des hinteren Abdeckteils (7) zwischen ihren Enden in eine Führungskulisse (37) einläuft, welche die Koppelstange (33) zwischen ihren Enden quer zu ihrer Längsrichtung seitlich übergreift.

6. Abdeckvorrichtung nach Anspruch 4 oder 5,
**dadurch gekennzeichnet,**
**daß** eine Drehachse (22), um die das hintere Abdeckteil (7) am vorderen Abdeckteil (6) schwenkverstellbar gelagert ist, in einer Projektion der Koppelstange (33) auf die Ebene des vorderen Abdeckteils (6) in der Aktivstellung des hinteren Abdeckteils (7) zwischen den Kugelgelenken (34) und (35) der Koppelstange (33) verläuft.

7. Abdeckvorrichtung nach einem der Ansprüche 4 bis 6,
**dadurch gekennzeichnet,**
**daß** der Umlenkhebel (24) in der Aktivstellung des hinteren Abdeckteils (7) eine erste Übertotpunktlage einnimmt, in der über die Koppelstange (33) in den Umlenkhebel (24) eingeleitete Druckkräfte den Umlenkhebel (24) in einer der Deaktivierung des hinteren Abdeckteils (7) entgegenwirkenden Richtung antreiben.

8. Abdeckvorrichtung nach einem der Ansprüche 3 bis 7,
**dadurch gekennzeichnet,**
**daß** die Hebelanordnung (19) Federmittel (39) aufweist, die einer Verstellung des hinteren Abdeckteils (7) aus der Aktivstellung in die Passivstellung entgegenwirken und/oder die eine Verstellung des hinteren Abdeckteils (7) aus der Passivstellung in die Aktivstellung unterstützen.

9. Abdeckvorrichtung nach den Ansprüchen 4 und 8,
**dadurch gekennzeichnet,**
**daß** die Federmittel (39) am Umlenkhebel (24) angreifen.

10. Abdeckvorrichtung nach Anspruch 9,
**dadurch gekennzeichnet,**
**daß** der Umlenkhebel (24) in der Passivstellung des hinteren Abdeckteils (7) eine zweite Übertotpunktlage einnimmt, in der über die Federmittel (39) in den Umlenkhebel (24) eingeleitete Druckkräfte den Umlenkhebel (24) in einer der Aktivierung des hinteren Abdeckteils (7) entgegenwirkenden Richtung antreiben.

11. Abdeckvorrichtung nach einem der Ansprüche 3 bis 10,
**dadurch gekennzeichnet,**
**daß** die Hebelanordnung über ein flexibles Kopplungselement (27) zur Übertragung von Linearverstellungen mit einer karosserieseitig abgestützten Zwangssteuerungseinrichtung zum Verstellen der Dachkonstruktion (10) mechanisch zwangsgekoppelt ist.

12. Abdeckvorrichtung nach Anspruch 11,
**dadurch gekennzeichnet,**
**daß** das Kopplungselement als Zug-Druck-Kabeleinheit (27) ausgebildet ist.

13. Abdeckvorrichtung nach Anspruch 11,
**dadurch gekennzeichnet,**
**daß** ein Schwenkantrieb für das vordere Abdeckteil (6) vorgesehen ist, der unabhängig von der Hebelanordnung (19) mit der Zwangssteuerungseinrichtung der Dachkonstruktion (10) mechanisch zwangsgekoppelt ist.

## Claims

1. Covering device for a roof stowage compartment of a vehicle with a roof structure (10) that can be lowered, in particular for a hardtop vehicle, such that the roof structure (10) can be pivoted into a stowage compartment located at the back of the vehicle body behind a rear area (4), the said stowage compartment being closed by a stowage compartment cover (1) that can be pivoted up towards the back, a free space being left between a front edge area (2) of the closed stowage compartment cover (1) and a rear edge (3) of the said rear area (4), said space being closed by a cover unit (5) of the covering device, the said cover unit (5) having a front cover portion (6) and a rear cover portion (7),
**characterised in that**
the rear cover portion (7) is mounted to pivot on the front cover portion (6) between an active position in which the rear cover portion (7) covers a gap (17) between a rear edge area (12) of the front cover portion (6) and the front edge area (2) of the stowage compartment cover (1) for a lower edge area of the roof structure (10), and a passive position in which the rear cover portion (7) leaves the said gap (17) open.

2. Covering device according to Claim 1,
**characterised in that**
in its passive position the rear cover portion (7) is folded over the underside of the front cover portion (6).

3. Covering device according to Claims 1 or 2,
**characterised in that**
to adjust the rear cover portion (7) a lever arrangement (19) is attached on the front cover portion (6), which converts linear movements on the entry side into pivoting movements of the rear cover portion (7).

4. Covering device according to Claim 3,
**characterised in that**
the lever arrangement (19) comprises a shift lever (24) mounted to pivot about a pivot axis (25) that extends essentially perpendicularly to the front cover portion (6), on one end of which the linear movements act and at the other end of which a connecting rod (33) is mounted by means of a first ball joint (34), such that the connecting rod (33) acts at its other end directly or indirectly on the rear cover portion (7) by means of a second ball joint (35), so that a pulling movement on the shift lever (24) transmits a pulling movement to the rear cover portion (7) via the connecting rod (33), which folds the rear cover portion (7) away over the underside of the front cover portion (6).

5. Covering device according to Claim 4,
**characterised in that**
when the rear cover portion (7) reaches its active position the connecting rod (33) moves in a guiding slideway (37) between its ends, said guide extending laterally over the connecting rod (33) between its ends transversely to its longitudinal direction.

6. Covering device according to Claims 4 or 5,
**characterised in that**
a pivot axle (22) about which the rear cover portion (7) is mounted to pivot on the front cover portion (6) extends in a projection of the connecting rod (33) on the plane of the front cover portion (6) in the active position of the rear cover portion (7) between the ball joints (34) and (35) of the connecting rod (33).

7. Covering device according to any of Claims 4 to 6,
**characterised in that**
in the active position of the rear cover portion (7) the shift lever (24) adopts a first over-dead-point position in which the pressure forces transmitted to the shift lever (24) by the connecting rod (33) move the shift lever (24) in a direction that opposes the deactivation of the rear cover portion (7).

8. Covering device according to any of Claims 3 to 7,
**characterised in that**
the lever arrangement (19) has springs (39) which oppose the movement of the rear cover portion (7) from its active to its passive position and/or which support the movement of the rear cover portion (7) from its passive to its active position.

9. Covering device according to Claims 4 and 8,
**characterised in that**
the springs (39) act on the shift lever (24).

10. Covering device according to Claim 9,
**characterised in that**
in the passive position of the rear cover portion (7) the shift lever (24) adopts a second over-dead-point position in which pressure forces transmitted to the shift lever (24) by the springs (39) move the shift lever (24) in a direction that opposes the activation of the rear cover portion (7).

11. Covering device according to any of Claims 3 to 10,
**characterised in that**
the lever arrangement is mechanically positively coupled by a flexible coupling element (27) to a positive control device supported on the vehicle body, to transmit linear movements for the adjustment of the roof structure (10).

12. Covering device according to Claim 11,
**characterised in that**
the coupling element consists of a push-pull cable unit (27).

13. Covering device according to Claim 11,
**characterised in that**
a pivot drive for the front cover portion (6) is provided, which is mechanically positively coupled to the positive control device of the roof structure (10) independently of the lever arrangement (19).

## Revendications

1. Dispositif de couverture pour un logement de capote d'un véhicule avec une construction de toit (10) escamotable, en particulier pour un véhicule à toit amovible, la construction de toit (10) étant rentrée dans le logement de capote disposé derrière une zone de sièges arrière (4) dans une zone arrière de la carrosserie du véhicule, le logement de capote pouvant être verrouillé à l'aide d'un couvercle de logement de capote (1) repliable vers l'arrière, entre une zone d'arête avant (2) du couvercle de logement de capote (1) fermé et une zone d'arête arrière (3) de la zone de sièges arrière (4) restant un espace libre qui peut être verrouillé à l'aide d'une unité de couverture (5) du dispositif de couverture, laquelle unité de couverture (5) présente une partie de couverture avant (6) et une partie de couverture arrière (7), **caractérisé en ce que** la partie de couverture arrière (7) est logée sur la partie de couverture avant (6) de manière à pouvoir régler le pivotement et peut être réglée entre une position active, dans laquelle la partie de couverture arrière (7) verrouille une fente (17) entre une zone d'arête arrière (12) de la partie de couverture avant (6) et la zone d'arête avant (2) du couvercle de logement de capote (1) pour une zone d'arête inférieure de la construction de toit (10), et une position passive, dans laquelle la partie de couverture arrière (7) libère la fente (17).

2. Dispositif de couverture selon la revendication 1, **caractérisé en ce que** la partie de couverture arrière (7) est rabattue dans sa position passive sur le dessous de la partie de couverture avant (6).

3. Dispositif de couverture selon la revendication 1 ou 2, **caractérisé en ce que** pour régler la partie de couverture arrière (7), une disposition de leviers (19) est montée sur la partie de couverture avant (6), laquelle disposition transforme des réglages linéaires côté entrée en des réglages de pivotement de la partie de couverture arrière (7).

4. Dispositif de couverture selon la revendication 3, **caractérisé en ce que** la disposition de leviers (19) présente un levier de renvoi (24) qui est logé de manière à pouvoir pivoter autour d'un axe de pivotement (25) s'étendant essentiellement perpendiculairement à la partie de couverture avant (6), sur une extrémité de laquelle sont appliqués des réglages linéaires et sur l'autre est logée une barre d'accouplement (33) au moyen d'une première rotule (34), la barre d'accouplement (33) étant appliquée au niveau de son autre extrémité au moyen d'une seconde rotule (35) directement ou indirectement sur la partie de couverture arrière (7), un réglage de traction étant appliqué sur le levier de renvoi (24) engageant par le biais de la barre d'accouplement (33) un réglage de traction sur la partie de couverture arrière (7) qui rabat la partie de couverture arrière (7) vers le dessous de la partie de couverture avant (6).

5. Dispositif de couverture selon la revendication 4, **caractérisé en ce que** la barre d'accouplement (33) parvient, lorsque la position active de la partie de couverture arrière (7) entre ses extrémités est atteinte, dans une coulisse de guidage (37) qui recouvre latéralement la barre d'accouplement (33) entre ses extrémités transversalement au sens longitudinal.

6. Dispositif de couverture selon la revendication 4 ou 5, **caractérisé en ce qu'**un axe de rotation (22), autour duquel est logée la partie de couverture arrière (7) sur la partie de couverture avant (6) de manière à pouvoir régler le pivotement, s'étend dans une projection de la barre d'accouplement (33) sur le plan de la partie de couverture avant (6) en position active de la partie de couverture arrière (7) entre les rotules (34) et (35) de la barre d'accouplement (33).

7. Dispositif de couverture selon l'une quelconque des revendications 4 à 6, **caractérisé en ce que** le levier de renvoi (24) occupe en position active de la partie de couverture arrière (7) une première position de point mort supérieur, dans laquelle des efforts de pression introduits par le biais de la barre d'accouplement (33) dans le levier de renvoi (24) entraînent le levier de renvoi (24) dans une direction contraire à la désactivation de la partie de couverture arrière (7).

8. Dispositif de couverture selon l'une quelconque des revendications 3 à 7, **caractérisé en ce que** la disposition de leviers (19) présente des moyens de ressort (39) qui agissent contre un réglage de la partie de couverture arrière (7) de la position active à la position passive et/ou qui soutiennent un réglage de la partie de couverture arrière (7) de la position passive à la position active.

9. Dispositif de couverture selon les revendications 4 et 8, **caractérisé en ce que** les moyens de ressort (39) sont appliqués sur le levier de renvoi (24).

10. Dispositif de couverture selon la revendication 9, **caractérisé en ce que** le levier de renvoi (24) occupe, en position passive de la partie de couverture arrière (7), une seconde position de point mort supérieur, dans laquelle des efforts de pression introduits par le biais de moyens de ressort (39) dans le levier de renvoi (24) entraînent le levier de renvoi (24) dans une direction contraire à l'activation de la partie de couverture arrière (7).

11. Dispositif selon l'une quelconque des revendications 3 à 10, **caractérisé en ce que** la disposition de leviers est couplée à force mécaniquement par le biais d'un élément de couplage flexible (27) destiné à transmettre les réglages linéaires à un dispositif de commande forcée en appui côté carrosserie afin de régler la construction de toit (10).

12. Dispositif de couverture selon la revendication 11, **caractérisé en ce que** l'élément de couplage est réalisé comme une unité de câbles traction-pression (27).

13. Dispositif de couverture selon la revendication 11, **caractérisé en ce qu'**un entraînement à pivotement est prévu pour la partie de couverture avant (6), lequel est couplé à force mécaniquement, indépendamment de la disposition de leviers (19), au dispositif de commande forcée de la construction de toit (10).
